# FASCICULE DE BREVET EUROPEEN

(11) **EP 1 567 460 B1**
(45) Date de publication et mention de la délivrance du brevet: **18.01.2012**
(21) Numéro de dépôt: 03808764.9
(22) Date de dépôt: 17.10.2003
(51) Int. Cl.: C03C 17/00

(54) **PROCEDE DE DECORATION D UN OBJET EN VERRE, INCLUANT UN FENETRAGE**
VERFAHREN ZUR DEKODIERUNG EINES GLASGEGENSTANDES MIT EINSCHLUSS EINES FENSTERS
METHOD FOR DECORATING A GLASS OBJECT, INCLUDING A WINDOW

(30) Priorité: 17.10.2002 FR 0212945
(43) Date de publication de la demande: 31.08.2005
(73) Titulaire: Saga Decor S.A., 60723 Pont Sainte Maxence (FR)
(72) Inventeur: LIGI, Sylvain, 60140 LIANCOURT (FR); MEHAUX, Daniel, F-60310 Beaulieu Les Fontaines (FR); HERMEL, Max, F-60190 Arsy (FR)
(74) Mandataire: Merckling, Norbert
(86) Numéro de dépôt international: PCT/FR2003/003089
(87) Numéro de publication internationale: WO 2004/035499

(56) Documents cités:
- EP-A- 0 849 235
- EP-A- 0 916 626

## Description

La présente invention se rapporte au domaine technique général de la décoration d'objets en verre, en particulier de bouteilles.

Il est connu de mettre en oeuvre des procédés de décoration de bouteille dans lesquels on utilise une projection de particules d'émail sur une bouteille.

On connaît ainsi un procédé de décoration d'un objet en verre du type récipient ou bouteille consistant :
a) à projeter sur l'objet en verre, un produit à base d'émail,
b) à disposer l'objet ainsi traité dans un four, pour une cuisson à une température comprise entre 600°C et 650°C, pendant une durée comprise entre 10 et 25 minutes.
c) à refroidir l'objet en verre émaillé ainsi obtenu.

A titre d'exemple, l'objet revêtu de particules d'émail subit une opération de cuisson à une température de l'ordre de 640°C pendant une durée d'environ 20 minutes.

A titre d'exemple, ce procédé permet d'obtenir un effet satiné ou dépoli imitant l'effet givré, lequel peut également être obtenu par attaque chimique à l'acide fluorhydrique. L'utilisation d'un tel acide pose cependant des problèmes de sécurité de manipulation d'une part et de pollution environnementale d'autre part.

L'émail utilisé dans un tel procédé peut contenir des produits minéraux opacifiant tels que du dioxyde d'étain ou du dioxyde de zirconium. Alternativement, il est également possible, pour obtenir un même aspect dépoli ou satiné, d'utiliser un mélange de deux frittes d'émail dont l'une est plus réfractaire que l'autre. On peut aussi utiliser un émail transparent que l'on cuit à 10°C ou 20°C en dessous de sa température de cuisson habituelle. L'émail peut également être associé à des pigments colorants permettant de donner à l'objet une coloration, éventuellement combinée avec un aspect brillant, satiné, mat ou dépoli.

Sur certains objets en verre, notamment des bouteilles, il peut être souhaitable d'obtenir une zone non décorée ou transparente dans laquelle apparaît le verre brut même après une projection à base d'émail, et l'opération de cuisson dudit objet revêtu d'une composition d'émail, ce revêtement pouvant être incolore ou coloré. Dans cette zone non décorée, que l'on appelle communément "fenêtre" ou "épargne", on peut le cas échéant avoir un accès visuel au contenu de l'objet en verre ou de la bouteille.

Le procédé connu, voir EP 849 235, comprenant les étapes (a), (b) et (c) est donc complété d'une étape consistant à réaliser une fenêtre transparente sur l'objet en verre.

L'obtention d'une zone non décorée, c'est-à-dire une fenêtre ou une épargne résulte d'une méthode connue qui consiste en un dépolissage chimique. Cette technique consiste à déposer de façon localisée par sérigraphie une encre qui sera cuite à une température comprise entre 200 et 300°C pendant une durée de 20 minutes. Cette encre est ensuite suffisamment résistante pour protéger la partie du verre recouverte, durant une attaque chimique destinée à ôter le revêtement obtenu avec la composition d'émail. L'encre s'élimine ensuite facilement par une action mécanique en fin de procédé.

Il s'avère qu'après une pulvérisation de la composition d'émail et une cuisson à une température comprise entre 600 et 650°C, l'encre se détériore. L'encre de protection ne résiste pas à des températures de cuisson élevées de l'ordre de 600°C. L'encre est brûlée et se fractionne en morceaux, lesquels entraînent des particules d'émail qui étaient déposées sur ladite encre. Ces particules d'émail peuvent alors se déposer en tout point de l'objet en verre et notamment sur la partie destinée à rester transparente.

Des inconvénients similaires résultent d'autres techniques, dans lesquelles on utilise une étiquette de papier, autocollante, en remplacement de la couche d'encre. Dans toutes ces techniques, des particules d'émail risquent de migrer vers le bas ou le haut de la bouteille et d'altérer la surface décorée ou la partie destinée à rester transparente. La destruction au cours de la cuisson d'une étiquette autocollante peut ainsi altérer l'effet esthétique recherché sur le restant de la bouteille.

Il est également connu d'appliquer par sérigraphie sur une bouteille ayant subi un dépolissage chimique total, un émail transparent qui après cuisson redonne une certaine transparence à la bouteille. L'effet obtenu par cette technique est très aléatoire et dépend de la composition d'émail utilisée d'une part, ainsi que des conditions d'application. Les meilleurs résultats sont obtenus avec un émail à basse température de cuisson, contenant une quantité importante de plomb. Cette présence de plomb entraîne une pollution qu'il convient de traiter selon les réglementations et les normes en vigueur, engendrant ainsi un surcoût non négligeable. En tout état de cause la transparence finale obtenue est inférieure à celle obtenue avec le verre brut.

L'utilisation d'un dépolissage chimique pour des raisons de pollution et de sécurité, présente également un certain nombre d'inconvénients et notamment une incidence non négligeable sur les coûts de fabrication.

Selon une autre technique, il est possible de mettre en place sur l'objet en verre ou sur la bouteille un cache, lequel recouvre la partie à protéger et à procéder à un dépolissage par sablage sur le restant de l'objet ou de la bouteille. Cette technique présente l'inconvénient de donner un grain grossier sur la bouteille. En outre on n'obtient pas une bonne homogénéité sur des surfaces arrondies. Une autre technique, selon US 6238 847, consiste à utiliser un laser pour faire fondre l'émail uniquement aux endroits voulus.

Le but de la présente invention vise à améliorer les procédés de décoration connus de manière à obtenir une fenêtre ou une épargne présentant une grande transparence d'une part et n'altérant pas l'esthétique du restant de la bouteille d'autre part.

Un autre but de la présente invention vise à optimiser les moyens mis en oeuvre pour obtenir une fenêtre, de manière à s'affranchir de l'utilisation de produits dangereux ou toxiques.

Un but complémentaire du procédé conforme à l'invention est de réduire le prix de revient de chaque objet en verre ou bouteille obtenue par ledit procédé.

Selon l'invention le procédé consiste :
(e) à déposer sur l'objet en verre une préparation d'émail réfractaire présentant une température de fusion supérieure à 700°C, de sorte que le dépôt recouvre une zone correspondant à la fenêtre transparente à réaliser, ce dépôt étant effectué avant l'étape (a),
(f) et à mettre en oeuvre l'étape (d) grâce à un retrait du dépôt de la préparation d'émail réfractaire par voie mécanique, à l'issue de l'étape (c).

Le procédé conforme à l'invention permet d'obtenir sur un objet en verre, une fenêtre transparente, en même temps qu'un aspect coloré, brillant, satiné ou mat ou dépoli, au dehors de ladite fenêtre transparente.

Selon un mode de mise en oeuvre, l'étape (e) est mis en oeuvre à l'aide d'une opération de sérigraphie.

Le retrait par voie mécanique consiste par exemple en un lavage par jet d'eau à haute pression ou en une opération de brossage.

Le dépôt de préparation d'émail réfractaire ainsi que le revêtement de la composition d'émail sont ainsi ôtés de la surface de la bouteille ou de l'objet en verre. La préparation d'émail réfractaire utilisée présente de préférence une température de fusion comprise entre 750°C et 1 000°C.

Selon un exemple de mise en oeuvre du procédé conforme à l'invention, on procède à une cuisson de la bouteille ou de l'objet en verre à une température de 640 à 650°C pendant une durée comprise entre 15 et 20 minutes. L'application par sérigraphie de la préparation d'émail réfractaire se fait de préférence à travers une toile comportant un nombre de fils au centimètre, compris entre 77 et 95.

A titre d'exemple, la préparation d'émail réfractaire est référencée soit par RD 204 -64-64 pour la Société JOHNSON MATTHEY, soit par VD9011/MX57 pour la Société FERRO. La préparation d'émail réfractaire appliquée par sérigraphie est un produit en général livré sous forme thermofusible qui se liquéfie entre 60 et 80°C. Son accroche sur l'objet en verre ou sur la bouteille se fait par conséquent à basse température.

A titre de variante, tout produit réfractaire pouvant s'appliquer par sérigraphie en pâte thermofusible et dont la température de cuisson est supérieure à 700°C peut être utilisé.

Selon un exemple de mise en oeuvre, le procédé conforme à l'invention consiste à projeter le produit à base d'émail sur l'objet en verre, à l'aide d'une pulvérisation électrostatique par voie sèche. Une pulvérisation par voie liquide peut également être utilisée.

D'autres caractéristiques et avantages ressortiront également de la description détaillée figurant ci-après, en référence aux dessins annexés, à titre d'exemples non limitatifs dans lesquels :
- la figure 1 est une représentation schématique d'une succession d'étapes d'un exemple de mise en oeuvre du procédé conforme à l'invention,
- la figure 2 est une représentation schématique d'une succession d'étapes d'une variante de mise en oeuvre du procédé conforme à l'invention,
- la figure 3 est une autre variante de mise en oeuvre du procédé conforme à l'inveniton.

Le procédé de décoration conforme à l'invention s'applique tout particulièrement à un objet en verre, du type récipient ou bouteille. Dans le cadre de ce procédé, on projette sur l'objet en verre, un produit à base d'émail, par exemple par l'intermédiaire d'une pulvérisation électrostatique par voie sèche. Une telle pulvérisation est connue en tant que telle.

On dispose ensuite l'objet recouvert du produit à base d'émail dans un four pour une cuisson à une température comprise entre 600 et 650°C, par exemple égale à 640°C. Cette cuisson est effectuée pendant une durée comprise entre 15 et 25 minutes, par exemple égale à 20 minutes.

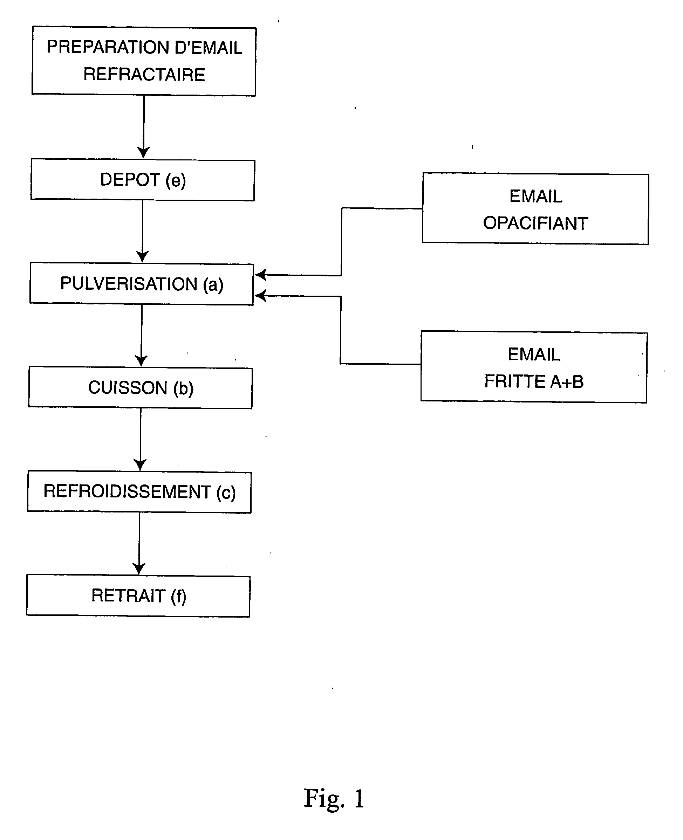

La figure 1 schématise les différentes étapes du procédé, à savoir l'utilisation d'une préparation d'émail réfractaire, déposée par sérigraphie sur l'objet en verre ou sur la bouteille au cours de l'étape (e). On procède ensuite selon l'étape (a) à une pulvérisation électrostatique par voie sèche d'un produit à base d'émail comportant un produit minéral opacifiant ou un émail comportant un mélange de deux frittes d'émail A et B dont l'une est plus réfractaire que l'autre.

On procède ensuite à une cuisson suivant l'étape (b) par exemple à une température de 640 à 650°C pendant une durée de 20 minutes. On procède ensuite à un refroidissement selon l'étape (c) et pour finir à un retrait par voie mécanique du dépôt par sérigraphie ainsi que du revêtement, sous l'étape (f). On obtient alors une fenêtre localisée et transparente..

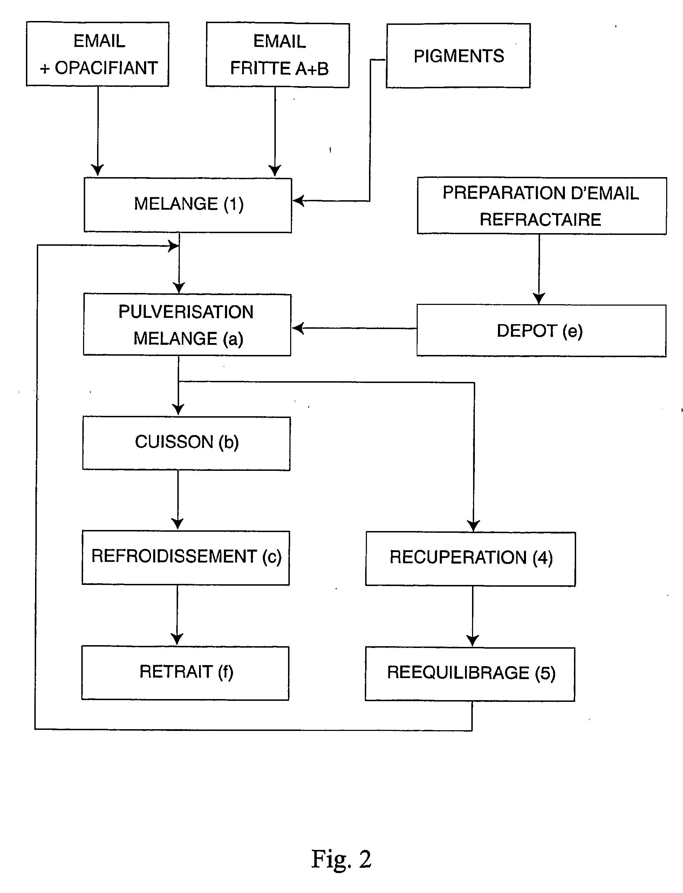

Selon un autre mode de mise en oeuvre du procédé conforme à l'invention schématisé par exemple à la figure 2, on utilise des pigments pour obtenir une coloration de la composition d'émail appliqué sur la bouteille ou sur l'objet en verre par pulvérisation électrostatique par voie sèche.

Le procédé mis en oeuvre dans cette application reprend des étapes telles que décrites que précédemment et schématisées à la figure 1, complétées par les étapes décrites ci-après.

Selon un mode de mise en oeuvre du procédé conforme à l'invention, le produit à base d'émail comprend également un produit minéral opacifiant du type dioxyde de zirconium ou dioxyde d'étain.

Selon un autre mode de mise en oeuvre du procédé conforme à l'invention, le produit à base d'émail comprend un mélange de deux frittes d'émail A et B dont l'une est plus réfractaire que l'autre.

Dans le cadre du procédé conforme à l'invention, et préalablement à l'étape de pulvérisation électrostatique par voie sèche, on mélange à froid le produit à base d'émail avec un ou plusieurs pigments. L'étape de mélange est repérée par la référence (1) sur la figure 2. Ce mélange est effectué par des fûts rotatifs ou un mélangeur à hélice.

Le procédé consiste plus précisément à mélanger avec le produit à base d'émail de 0,5 % à 20 % en poids d'un ou plusieurs pigments. Cette fourchette définit la proportion initiale du ou des pigments dans le mélange obtenu. La granulométrie de ces pigments est comprise entre 15 nm et 50 µm. Ces pigments sont inorganiques et présentent des températures de cuisson généralement supérieures à 600°C.

L'homogénéité du mélange pulvérulent du produit à base d'émail et des pigments est par exemple obtenue par rotation dans un fût à température ambiante pendant une à deux heures environ. Cette durée dépend de la quantité mélangée.

Tout autre moyen permettant une bonne répartition des pigments dans le produit à base d'émail peut également être envisagé. Cette opération de mélange ne doit cependant pas broyer le produit à base d'émail utilisé sous forme de poudre. Ce produit à base d'émail est par exemple commercialisé par la Société Ferro sous le nom VNR 9404®.

Dans le cadre du procédé de décoration conforme à l'invention on recycle également le produit à base d'émail non déposé sur l'objet en verre en le récupérant et en réajustant la proportion de pigments pour rétablir la proportion initiale dans le mélange (0,5 à 20 % en poids) et ce avant toute nouvelle projection par voie électrostatique sèche. Ceci s'explique par le fait qu'une quantité de poudre moindre est déposée sur la bouteille lorsque le produit à base d'émail est mélangé à des pigments. Il est ainsi nécessaire d'utiliser dans le cadre de ce procédé des pistolets de pulvérisation complémentaires. Ces pistolets sont par exemple commercialisés sous la marque GEMA® de type PG1-A ou PG2-A.

En outre, la proportion de pigments qui se dépose sur l'objet en verre traité est inférieure à la proportion initiale dans le mélange initial. Le mélange récupéré et non déposé présente donc une proportion accrue de pigments. Il convient donc de rééquilibrer cette proportion après le recyclage et avant un nouveau dépôt par pulvérisation électrostatique par voie sèche. Les étapes de récupération et de rééquilibrage sont repérées sur la figure 2, respectivement par les références (4) et (5).

A titre d'exemple de mise en oeuvre du procédé conforme à l'invention, on mélange une fritte de particules d'émail commercialisée par la Société FERRO sous la dénomination VNR 9404 ® avec des pigments commercialisés par la Société KEMIRA PIGMENTS OY sous la référence UV Titan L530®.

D'autres pigments de cette société, par exemple référencés L181, L320, L531 ou L830 pourraient également être utilisés pour obtenir les variantes de coloration.

Le mélange utilisé comprend de préférence 98 % de cette fritte de particules d'émail et 2 % de colorant.

Après l'homogénéisation, le mélange obtenu est pulvérisé sur une bouteille en verre blanc transparent par le procédé électrostatique par voie sèche avec des pistolets GEMA® à une tension de 100 KV. La masse en produit à base d'émail déposé sur la bouteille doit être compris entre 3,5 et 8 g et de préférence égal à 4 g. Cette masse de 4g correspond à une bouteille de 70cl, d'une hauteur de 240 mm. Pour une bouteille de 1l, cette masse est de 6g. L'étape de pulvérisation est repérée par la référence (a).

On fait subir ensuite à la bouteille une cuisson à 650°C pendant une durée d'environ 25 minutes. L'étape de cuisson est repérée par la référence (b). Après la cuisson on obtient une bouteille de teinte blanche dont la couche superficielle présente une rugosité arythmétique comprise entre 1,8 et 3 µm, mesurée à l'aide d'un appareil Pertomether M4P1® de la Société MAHR.

Le procédé de décoration conforme à l'invention présente l'avantage et ce contre toute attente de fournir une variété importante de colorations combinées à un effet dépoli, lesdites colorations présentant une très grande homogénéité. En outre, la rugosité obtenue est optimale.

Cet aspect esthétique particulier présente en outre une fenêtre ou épargne dans laquelle apparaît le verre brut. D'innombrables combinaisons esthétiques sont ainsi envisageables.

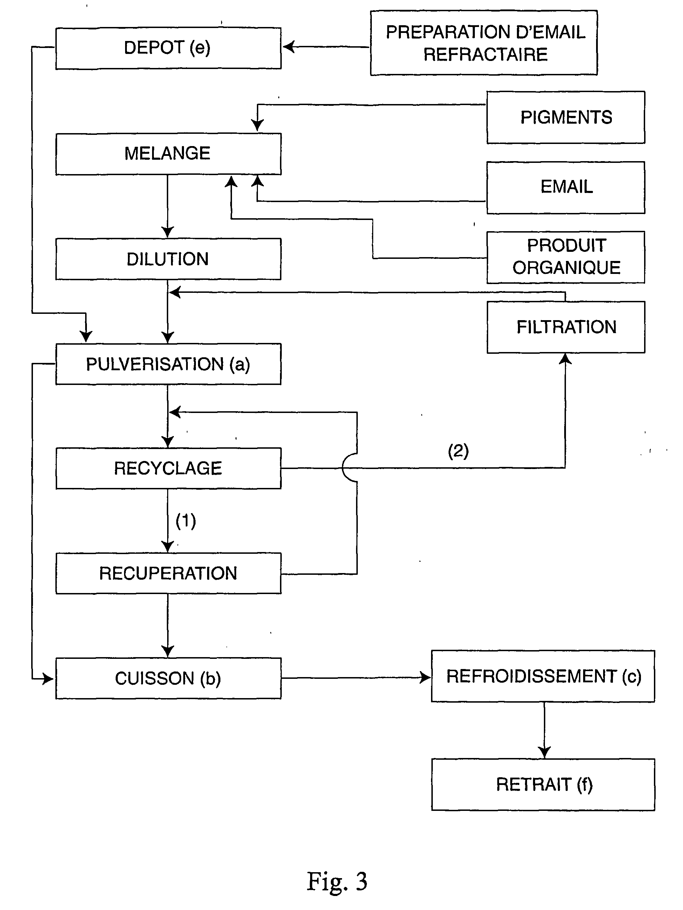

Selon un autre exemple de mise en oeuvre du procédé conforme à l'invention, l'étape (a) correspond à une pulvérisation électrostatique par voie liquide. On pourra par exemple se reporter à la figure 3.

On dépose ainsi sur l'objet en verre une préparation d'émail réfractaire présentant une température de fusion supérieure à 700°C. Ce dépôt recouvre une zone correspondant à la fenêtre transparente à réaliser.

Selon cet exemple de mise en oeuvre, on procède à un mélange d'un émail du type VNR 4402/74-111 de la Société FERRO avec des pigments. Ces derniers peuvent être choisis parmi les pigments commercialisés par la Société FERRO. L'émail utilisé est une fritte en poudre et une fois mélangée avec les pigments, on rajoute au mélange initial un produit organique miscible dans l'eau à hauteur de 35 à 45 % en poids, pour obtenir un produit à base d'émail utilisable dans un procédé de pulvérisation électrostatique par voie liquide. A titre d'exemple le produit organique miscible dans l'eau commercialisé par la Société FERRO. Dans une autre étape de mélange, on dilue l'ensemble avec de l'eau à hauteur de 50 %, de façon homogène à l'aide d'un mélangeur à hélice ou d'une rotation de fûts.

Lorsque cette troisième étape de mélange est effectuée, on procède ensuite à une pulvérisation électrostatique référencée par l'étape (a). On pulvérise ainsi le produit à base d'émail coloré sur l'objet en verre y compris sur le dépôt d'émail réfractaire en utilisant des moyens de pulvérisation qui permettent de conserver le degré d'hydratation dudit produit à base d'émail.

Le matériel de pulvérisation est commercialisé par exemple par la Société ITW Surfaces et Finitions. Ce matériel comprend un pistolet de pulvérisation constitué d'un bol rotatif sur palier fluide du type Aerobell fourni par la Société De Vilbiss.

L'utilisation d'un tel pistolet qui permet de ne pas altérer l'hydratation du produit à base d'émail rend donc possible sa réutilisation sans réhydratation. Le produit à base d'émail non déposé sur l'objet en verre peut donc être récupéré et directement réutilisé dans le procédé de pulvérisation électrostatique par voie liquide. Le produit à base d'émail n'est que très faiblement modifié dans sa composition et cette modification par rapport à la composition initiale ne nécessite pas de retraitement tout au long du procédé de décoration.

A titre d'exemple, la viscosité du produit à base d'émail, mesurée avec la coupe Ford N° 4 est de 20 secondes sur le produit neuf, et de 22 secondes pour le produit recyclé après une journée d'utilisation.

Selon un exemple de mise en oeuvre, on recycle également le produit à base d'émail pulvérisé mais non déposé sur l'objet en verre. Ce recyclage est obtenu grâce à une circulation d'un rideau de ce même produit à base d'émail coloré, lequel collecte la fraction du produit pulvérisé vers l'objet et non déposé sur celui-ci. Ce rideau de produit à base d'émail est récupéré et réutilisé en continu pour générer ledit rideau de produit à base d'émail, sans interruption.

Cette première phase de recyclage est référencée par la référence (1) à la figure 3. Il est également possible, suivant une autre phase de l'étape de recyclage indiquée par la référence (2), de procéder à une filtration du produit à base d'émail et de le réutiliser dans l'étape de pulvérisation électrostatique par voie liquide. Cette phase référencée (2) est mise en oeuvre après une augmentation substantielle de la quantité de produit à base d'émail disponible pour le recyclage.

L'objet en verre est ensuite amené dans un four où il subit une cuisson à une température comprise entre 600 et 650°C pendant une durée de 15 à 25 minutes. Il n'y a donc quasiment aucune perte de produit à base d'émail et aucun traitement long et difficile à effectuer dans le cadre du recyclage du produit non déposé.

Selon une étape complémentaire du procédé, on supprime le revêtement constitué par le produit à base d'émail coloré sur le fond dudit objet et ce au préalable de l'étape (b) correspondant à la cuisson. On évite ainsi tout accrochage ou liaison entre l'objet en verre et son support dans le four lors de l'opération de cuisson. Une telle liaison pourrait s'établir par réaction entre ledit support et l'émail, lors de la cuisson si ledit revêtement n'était pas supprimé.

La suppression de cette partie de revêtement est obtenue en amenant (par tous moyens) les fonds des objets en verre sur un tapis tournant. C e dernier supprime le revêtement par simple action mécanique. Une cuve de nettoyage et des moyens d'essorage d'un tel tapis peuvent également être prévus. Cette phase est réalisée par une machine, appelée "désemailleuse" utilisée dans les métiers de la porcelaine.

Après l'étape de cuisson (b), on laisse refroidir (étape (c)) l'objet en verre et on procède au retrait (f) du dépôt de préparation d'émail réfractaire par voie mécanique. On obtient ainsi une fenêtre transparente sur l'objet en verre décoré.

## Revendications

1. Procédé de décoration d'un objet en verre, du type récipient ou bouteille, consistant à :
(a) projeter sur l'objet en verre un produit à base d'émail,
(b) disposer l'objet traité dans un four à des fins de cuisson, à une température comprise entre 600 et 650°C pendant 10 à 25 minutes,
(c) refroidir l'objet en verre émaillé ainsi obtenu,
(d) et réaliser une fenêtre transparente sur l'objet en verre,
**caractérisé en ce qu'**il consiste :
(e) à déposer sur l'objet en verre une préparation d'émail réfractaire présentant une température de fusion supérieure à 700°C, de sorte que le dépôt recouvre une zone correspondant à la fenêtre transparente à réaliser, ce dépôt étant effectué avant l'étape (a),
(f) et à mettre en oeuvre l'étape (d) grâce à un retrait du dépôt de la préparation d'émail réfractaire par voie mécanique, à l'issue de l'étape (c).

2. Procédé selon la revendication 1, **caractérisé en ce que** l'étape (e) est mise en oeuvre à l'aide d'une opération de sérigraphie.

3. Procédé selon la revendication 1 ou 2, **caractérisé en ce que** le retrait par voie mécanique consiste en un lavage par jet d'eau à haute pression, ou en une opération de brossage.

4. Procédé selon l'une des revendications 1 à 3, **caractérisé en ce qu'**il consiste à utiliser une préparation d'émail réfractaire présentant une température de fusion de préférence comprise entre 750°C et 1 000 °C.

5. Procédé selon la revendication 4, **caractérisé en ce que** la préparation d'émail réfractaire se liquéfie à une température comprise entre 60°C et 80°C de manière à pouvoir être appliquée par sérigraphie.

6. Procédé selon l'une quelconque des revendications 1 à 4, **caractérisé en ce qu'**il consiste à utiliser un médium, en phase liquide à température ambiante, et mélangé avec la préparation d'émail réfractaire, l'étape (e) étant alors complétée d'une opération de séchage du dépôt.

7. Procédé selon l'une quelconque des revendications 1 à 6, **caractérisé en ce qu'**il consiste sous (a) à utiliser une pulvérisation électrostatique par voie sèche.

8. Procédé selon l'une quelconque des revendications 1 à 6, **caractérisé en ce qu'**il consiste, sous (a), à utiliser une pulvérisation électrostatique par voie liquide.

## Claims

1. A method for decorating a glass object, of the container or bottle type, consisting of:
(a) projecting on the glass object an enamel-based product,
(b) placing the treated object in an oven for baking purposes, at a temperature comprised between 600 and 650°C for 10 to 25 minutes,
(c) cooling the thereby obtained enameled glass object,
(d) and making a transparent window on the glass object,
**characterized in that** it consists of:
(e) depositing on the glass object a preparation of refractory enamel having a melting temperature above 700°C, so that the deposit covers an area corresponding to the transparent window to be made, this deposition being carried out before step (a),
(f) and applying step (d) by removing the deposit of refractory enamel preparation via a mechanical route, at the end of step (c).

2. The method according to claim 1, **characterized in that** step (e) is applied by means of a screen-printing operation.

3. The method according to claim 1 or 2, **characterized in that** the removal via a mechanical route consists in washing with a high-pressure water jet, or in a brushing operation.

4. The method according to one of claims 1 to 3, **characterized in that** it consists in using a refractory enamel preparation having a melting temperature, preferably comprised between 750°C and 1,000°C.

5. The method according to claim 4, **characterized in that** the refractory enamel preparation liquefies at a temperature comprised between 60°C and 80°C so as to be able to be applied by screen-printing.

6. The method according to any of claims 1 to 4, **characterized in that** it consists of using a medium in a liquid phase at room temperature, and mixed with the refractory enamel preparation, step (e) then being completed by an operation for drying the deposit.

7. The method according to any of claims 1 to 6, **characterized in that** under (a) it consists of using dry electrostatic spraying.

8. The method according to any of claims 1 to 6, **characterized in that** under (a) it consists of using liquid electrostatic spraying.

## Patentansprüche

1. Verfahren zur Dekoration eines Gegenstands aus Glas vom Typ Behälter oder Flasche, das darin besteht,
(a) auf den Glasgegenstand ein Produkt auf der Basis von Email aufzubringen,
(b) den behandelten Gegenstand in einem Ofen zum Brennen bei einer Temperatur zwischen 600 und 650 °C inklusive während 10 bis 25 Minuten anzuordnen,
(c) den derart hergestellten emaillierten Glasgegenstand abzukühlen,
(d) und ein durchsichtiges Fenster auf dem Glasgegenstand einzuarbeiten, **dadurch gekennzeichnet, dass** es darin besteht:
(e) auf den Glasgegenstand eine feuerfeste Emailzubereitung mit einer Schmelztemperatur von über 700 °C derart aufzubringen, dass die Auflage einen Bereich bedeckt, die dem herzustellenden durchsichtigen Fenster entspricht, wobei diese Auflage vor dem Schritt (a) durchgeführt wird,
(f) und nach Schritt (c) durch Entfernen der Auflage der feuerfesten Emailzubereitung auf mechanischem Weg Schritt (d) durchzuführen.

2. Verfahren nach Anspruch 1, **dadurch gekennzeichnet, dass** der Schritt (e) mit Hilfe eines Siebdruckverfahrensschritts durchgeführt wird.

3. Verfahren nach Anspruch 1 oder 2, **dadurch gekennzeichnet, dass** das Entfernen auf mechanischem Weg ein Abwaschen durch Hochdruck-Wasserstrahl oder ein Abbürsten ist.

4. Verfahren nach einem der Ansprüche 1 bis 3, **dadurch gekennzeichnet, dass** es darin besteht, eine feuerfeste Emailzubereitung zu verwenden, die eine bevorzugte Schmelztemperatur von zwischen 750 °C und 1000 °C inklusive aufweist.

5. Verfahren nach Anspruch 4, **dadurch gekennzeichnet, dass** sich die feuerfeste Emailzubereitung bei einer Temperatur zwischen 60 °C und 80 °C inklusive verflüssigt, so dass sie im Siebdruck auftragbar ist.

6. Verfahren nach einem der Ansprüche 1 bis 4, **dadurch gekennzeichnet, dass** es darin besteht, ein Medium in flüssiger Phase bei Raumtemperatur gemischt mit der feuerfesten Emailzubereitung zu verwenden, wobei Schritt (e) dann durch einen Vorgang des Trocknens der Auflage ergänzt wird.

7. Verfahren nach einem der Ansprüche 1 bis 6, **dadurch gekennzeichnet, dass** es bei (a) darin besteht, ein elektrostatisches Sprühen auf trockenem Weg zu verwenden.

8. Verfahren nach einem der Ansprüche 1 bis 6, **dadurch gekennzeichnet, dass** es bei (a) darin besteht, ein elektrostatisches Sprühen auf flüssigem Weg zu verwenden.
